# DEMANDE DE BREVET EUROPEEN

(11) **EP 0 554 133 A1**
(43) Date de publication de la demande: **04.08.1993**
(21) Numéro de dépôt: 93400069.6
(22) Date de dépôt: 13.01.1993
(51) Int. Cl.: G05G 7/04, F16D 23/12

(54) **Dispositif d'assistance à ressort**

(30) Priorité: 28.01.1992 FR 9200875
(71) Demandeur: ACCO LA TELEDYNAMIQUE, F-77005 Melun Cédex (FR)
(72) Inventeur: Deligny, Jean, F-93700 Epinay Sur Seine (FR)
(74) Mandataire: Derambure, Christian

(57) **Abrégé**

L'invention concerne un dispositif d'assistance à ressort pour commande à câble rappelé au repos par une force importance. Selon l'invention il comprend, dans un boîtier (6) traversé par le câble (2), un moyen de ressort précontraint (34) disposé entre un socle (22) et une tête (32).

Le socle (22) est monté à rotation autour d'un ergot (20) solidaire du boîtier (6) prévu à distance du câble (2) et la tête (32) est solidaire du câble (2) et prend appui sur un chemin de roulement (10) ménagé dans le boîtier sensiblement parallèle au câble (2).

Le moyen de ressort (34) présente un axe longitudinal (42) passant par l'ergot (20), de telle manière qu'au repos, l'axe longitudinal (42) est sensiblement confondu avec une perpendiculaire (40) au câble (2) passant par l'ergot (20) tandis qu'il s'en écarte en position d'assistance.

De préférence, la position de repos est instable, le dispositif présentant deux positions d'assistance opposées déterminées par une limitation de l'écartement de l'axe longitudinal de part et d'autre de la perpendiculaire.

## Description

La présente invention concerne un dispositif d'assistance à ressort pour commande à câble rappelé au repos par une force importante.

Un tel dispositif d'assistance trouve son utilité notamment dans une commande d'un mécanisme d'embrayage/débrayage, mais aussi dans une commande de frein et, plus généralement, pour tout ce qui est commandé par câble. Il sera toutefois fait référence dans la suite de cette description à une commande de mécanisme d'embrayage/débrayage pour véhicule automobile.

On sait que, dans un véhicule automobile, la commande du mécanisme d'embrayage/débrayage se fait au moyen d'une pédale sur laquelle le conducteur doit appliquer une force relativement importante. Lorsqu'il relâche la pédale la force de l'embrayage devient motrice de manière à ramener la pédale dans sa position de repos. Cette force est importante car il est nécessaire que les disques d'embrayage soient correctement appliqués l'un sur l'autre sans frottement en position embrayée.

Diverses solutions existent à présent pour assister l'effort du conducteur. Par exemple le document EP-A-0 177 341 décrit un dispositif pneumatique mettant en oeuvre des différences de pression pour assister le mouvement du câble. Toutefois cette solution présente l'inconvénient de devoir être fixée au mécanisme d'embrayage lui-même rendant ce dernier quelque peu encombrant. En outre il requiert certains conduits permettant de mettre sous vide une chambre du dispositif. Enfin il s'agit d'un dispositif onéreux. Le document EP-A-0 239 471 décrit pour sa part un dispositif hydraulique d'assistance pour un véhicule automobile. Ce dispositif présente l'inconvénient également de nécessiter des conduits d'amenée du fluide hydraulique et de nécessiter en outre une source de fluide sous haute pression que l'on ne trouve que dans des véhicules haut de gamme équipés de système d'antiblocage des roues.

La présente invention a pour but un dispositif d'assistance ne nécessitant pas de conduits spécifiques et qui est particulièrement économique et fiable. En outre le dispositif selon l'invention présente l'avantage de pouvoir être monté à n'importe quel endroit dans le véhicule automobile sur le trajet du câble entre la pédale d'actionnement et le mécanisme d'embrayage/débrayage.

Selon l'invention, on atteint ces buts au moyen d'un dispositif d'assistance à ressort comprenant dans un boîtier traversé par le câble un moyen de ressort précontraint disposé entre un socle et une tête, le socle étant monté à rotation autour d'un ergot solidaire du boîtier prévu à distance du câble, et la tête étant solidaire du câble et prenant appui sur un chemin de roulement sensiblement parallèle au câble. Ce moyen de ressort présente un axe longitudinal passant par l'ergot. Ainsi au repos l'axe longitudinal est sensiblement confondu avec une perpendiculaire du câble passant par l'ergot tandis qu'en position d'assistance il s'en écarte.

De préférence, la position de repos du dispositif est instable, le dispositif présentant deux positions d'assistance opposées déterminées par une limitation de l'écartement de l'axe longitudinal du moyen de ressort de part et d'autre de la perpendiculaire précitée. Avantageusement le chemin de roulement peut présenter au moins partiellement une rampe destinée à confirmer la position d'assistance.

Selon un mode avantageux de réalisation de l'invention, le dispositif d'assistance comprend en outre un ressort disposé coaxialement au câble entre une virole et le boîtier pour assurer un dosage de l'assistance. La tête du moyen de ressort peut être pourvue d'une entretoise coaxiale au câble et dont une extrémité est susceptible de prendre appui sur la virole.

L'invention sera mieux comprise et d'autres buts, avantages et caractéristiques de celle-ci apparaîtront plus clairement à la lecture de la description qui suit d'un mode de réalisation donné à titre non limitatif et à laquelle une planche de dessins est jointe sur laquelle :
- La figure 1 représente schématiquement en coupe un dispositif d'assistance conforme à la présente invention dans une première position d'assistance dite négative ;
- La figure 2 représente le dispositif d'assistance de la figure 1 dans une deuxième position d'assistance dite positive ;
- La figure 3 représente schématiquement les graphes des efforts d'embrayage/débrayage et de l'effort appliqué à la pédale par le conducteur d'un véhicule mettant en oeuvre le dispositif d'assistance selon l'invention en fonction de la course de la pédale.

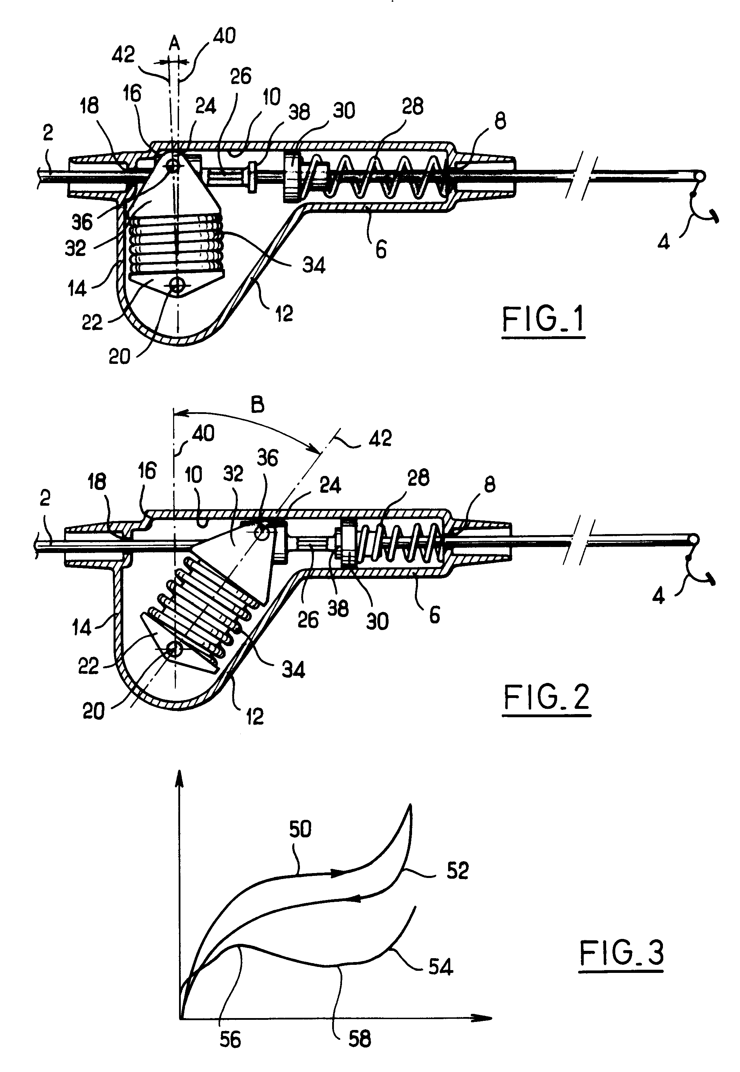

En référence maintenant aux figures, on a donc représenté schématiquement sur les figures 1 et 2 un dispositif d'assistance à ressort pour commande à câble prévu pour une commande d'embrayage/débrayage. Un câble 2 actionné par une pédale 4 est relié à un mécanisme d'embrayage/débrayage. Sur le trajet de ce câble, un boîtier 6 enferme les éléments du dispositif d'assistance. Ce boîtier est pourvu de deux orifices 8, 18 permettant au câble de traverser le boîtier.

Ce boîtier est conformé pour présenter un chemin de roulement 10 et enfermer un moyen de ressort précontraint 34 disposé entre un socle 22 et une tête 32. Le socle 22 est monté à rotation autour d'un ergot 20 solidaire du boîtier 6 et prévu à distance du câble 2. La tête 32 est solidaire du câble 2 par exemple au moyen d'un rivet 36. Ce moyen de ressort 34 présente donc un axe longitudinal 42 passant par l'ergot 20 et le rivet 36.

Dans le mode de réalisation représenté, le chemin de roulement 10 finit par une butée 16 limitant le mouvement comme il sera décrit ultérieurement. Toutefois cette butée n'est pas nécessaire puisque la limitation du mouvement peut être obtenue par contact de la tête 32 contre la paroi 14 du boîtier 6.

Une entretoise 26 est solidarisée à la tête 32 par exemple par l'intermédiaire du rivet 36. Cette entretoise 26 comporte à son extrémité libre une bride 38.

Un ressort hélicoïdal 28 est disposé dans le boîtier 6 entre l'orifice 8 et une virole 30. Le but de ce ressort 28 sera exposé ci-après.

Le dispositif d'assistance représenté sur les figures est à position de repos instable et présente deux positions d'assistance opposées. Bien que ceci ne soit pas obligatoire, une position d'assistance négative est souhaitable pour confirmer la position du câble lorsque le conducteur n'actionne pas la pédale 4. De ce fait, comme représentée figure 1, dans cette position d'assistance négative, la tête 32 coopère avec la butée 16 ménagée sur la rampe de roulement 10. Ainsi l'axe longitudinal 42 du moyen de ressort 34 ne se trouve pas dans cette position confondu avec la perpendiculaire 40 au câble 2 dépassant par l'ergot 20. L'axe 42 fait un angle A avec cette perpendiculaire 40.

Le fonctionnement de ce dispositif est le suivant.

En partant d'une position dans laquelle le conducteur n'actionne pas la pédale 4, l'assistance négative précédemment indiquée rappelle la pédale 4 en position dite haute. Lorsque le conducteur va actionner la pédale 4, il devra, dans un premier temps, vaincre la force de rappel du mécanisme d'embrayage/débrayage, ainsi que l'assistance négative du dispositif à ressort pour amener le dispositif d'assistance en position de repos dans laquelle l'axe 42 et la perpendiculaire 40 sont confondus. Lorsque le conducteur poursuit son effort sur la pédale 4, le câble 2 va amener le moyen de ressort 34 dans une position instable dans laquelle une assistance positive va se produire. En effet, l'axe longitudinal 42 change de côté par rapport à la perpendiculaire 40 et va commencer à présenter un angle B par rapport à cette dernière (figure 2). Se faisant le moyen de ressort précontraint 34 se détend en entraînant par frottement la tête 32 qui devient alors motrice. Le mouvement se continuant, l'effort à exercer sur la pédale 4 par le conducteur devient minime par rapport à l'effort requis par le mécanisme d'embrayage/débrayage. En bout de course, le moyen de ressort 34 et, plus particulièrement, la tête 32 vient au contact de la paroi 12 du dispositif d'assistance qui forme ainsi butée basse de la pédale.

Le ressort 28 est disposé de manière à modifier sensiblement la courbe d'assistance. En référence plus particulièrement à la figure 3, on a représenté schématiquement sous les références 50 et 52 l'effort nécessaire pour débrayer et embrayer en fonction de la course de la pédale. Les courbes 50 et 52 ne sont pas confondues puisqu'il y a un phénomène d'hystérésis qui se produit. Sous la référence 54, on a représenté l'effort nécessaire en fonction de la course sur la pédale pour obtenir le débrayage. On constate sur cette courbe d'abord que, à course très faible, l'effort à fournir sur la pédale est supérieur à celui requis par le mécanisme commandé. En effet, le dispositif d'assistance présente à ce moment-là une assistance négative comme on l'a vu précédemment. Cet effort, comme représenté sur la courbe 54, présente un premier point d'inflexion 56 correspondant sensiblement au moment où le dispositif d'assistance présente une assistance positive déjà importante. Le deuxième point d'inflexion 58 est celui dont la position va être réglée au moyen du ressort 28. En effet le ressort 28 vient s'opposer à l'action du moyen de ressort 34 dès lors que l'entretoise 26 ou, tout au moins, l'extrémité 38 de cette entretoise 26 vient au contact de la virole 30 à l'extrémité du ressort 28. On comprend donc que ce ressort 28 permet en pratique de doser la puissance de l'assistance partiellement ou tout au long de la course en fonction de la dimension de l'entretoise 26 et de la raideur du ressort 28. Dans un autre mode de réalisation la virole 30 est solidaire du câble ce qui permet de se passer de l'entretoise 26, le dosage de la puissance de l'assistance étant alors réparti uniformément tout au long de la course de la pédale 4.

Bien que seul un mode de réalisation préféré de l'invention ait été décrit et représenté, il est bien évident que toute modification pouvant être apportée dans le même esprit ne sortirait pas du cadre de l'invention. Notamment les matériaux respectifs du boîtier ou tout au moins du chemin de roulement 10 et de la tête 32 peuvent être choisis de manière à assurer un frottement approprié de la tête sur le chemin de roulement. Autrement, on peut également associer à la tête 32 et monter par exemple sur le rivet 36, un moyeu et deux roues pour limiter le frottement, les deux roues roulant alors sur le chemin de roulement 10. Des moyens d'amortissement peuvent également être prévus pour éviter des claquements lorsque le moyen de ressort 34 vient en butée de part et d'autre de la perpendiculaire 40 ou lorsque l'entretoise 26 vient en butée contre la virole 30.

L'homme de l'art aura compris que le dispositif d'assistance selon l'invention est un dispositif particulièrement simple ne nécessitant pas une source d'alimentation extérieure et étant particulièrement économique à réaliser avec une efficacité très importante.

## Revendications

1. Dispositif d'assistance à ressort pour commande à câble rappelé au repos par une force importance caractérisé en ce qu'il comprend, dans un boîtier (6) traversé par ledit câble (2), un moyen de ressort précontraint (34) disposé entre un socle (22) et une tête (32), ledit socle (22) étant monté à rotation autour d'un ergot (20) solidaire du boîtier (6) prévu à distance dudit câble (2), ladite tête (32) étant solidaire dudit câble (2) et prenant appui sur un chemin de roulement (10) ménagé dans ledit boîtier et sensiblement parallèle audit câble (2), ledit moyen de ressort (34) présentant un axe longitudinal (42) passant par ledit ergot (20), de telle manière qu'au repos, ledit axe longitudinal (42) soit sensiblement confondu avec une perpendiculaire (40) audit câble (2) passant par ledit ergot (20) tandis qu'il s'en écarte en position d'assistance.

2. Dispositif d'assistance selon la revendication 1, caractérisé en ce que la position de repos est instable, ledit dispositif présentant deux positions d'assistance opposées déterminées par une limitation de l'écartement dudit axe longitudinal de part et d'autre de ladite perpendiculaire.

3. Dispositif d'assistance selon la revendication 2, caractérisé en ce qu'au moins une butée (16) ménagée sur ledit chemin de roulement (10) limite le mouvement de ladite tête.

4. Dispositif d'assistance selon la revendication 2, caractérisé en ce que ledit boîtier est conformé (12, 14) pour limiter le mouvement de ladite tête.

5. Dispositif d'assistance selon l'une quelconque des revendications précédentes, caractérisé en ce que ledit chemin de roulement (10) présente au moins partiellement une rampe destinée à confirmer la position d'assistance.

6. Dispositif d'assistance selon l'une quelconque des revendications précédentes, caractérisé en ce que ladite tête (32) est pourvue de moyen de roulement coopérant avec ledit chemin de roulement (10).

7. Dispositif d'assistance selon l'une quelconque des revendications 1 à 5, caractérisé en ce que ladite tête (32) présente une extrémité arrondie en contact par frottement avec ledit chemin de roulement (10).

8. Dispositif d'assistance selon l'une quelconque des revendications précédentes, caractérisé en ce qu'il comprend en outre un ressort (28) disposé coaxialement audit câble (2) entre une virole (30) et ledit boîtier (6).

9. Dispositif d'assistance selon la revendication 8, caractérisé en ce que ladite virole (30) est solidaire dudit câble (2).

10. Dispositif d'assistance selon la revendication 8, caractérisé en ce que ladite tête (38) est solidaire d'une entretoise (26) coaxiale audit câble (2) et dont une extrémité (38) est susceptible de prendre appui sur ladite virole (30).

11. Dispositif d'assistance selon la revendication 10, caractérisé en ce qu'une distance déterminée est ménagée entre ladite virole (30) et ladite extrémité (38) de ladite entretoise (26) au repos.

12. Dispositif d'assistance selon l'une quelconque des revendications précédentes, caractérisé en ce que ledit moyen de ressort (34) est constitué par au moins deux ressorts hélicoïdaux précontraints coaxiaux.
